# EUROPEAN PATENT APPLICATION

(11) **EP 2 547 021 A1**
(43) Date of publication of application: **16.01.2013**
(21) Application number: 11173401.8
(22) Date of filing: 11.07.2011
(51) Int. Cl.: H04L 1/00, G09B 5/10

(54) **Method and system for adapting transmission parameters**

(71) Applicant: Televic Education NV, 8870 Izegem (BE)
(72) Inventor: Callewaert, Sven, 8820 Torhout (BE); De Donder, Xavier, 8780 Oostrozebeke (BE); Venant, Sylvie, 8940 Wervik (BE); Verhoeve, Piet, 8930 Menen (BE); Stubbe, Brecht, 9840 De Pinte (BE)
(74) Representative: Van Bladel, Marc

(57) **Abstract**

The present invention is related to a method for adapting at least one transmission parameter during the transmission of data content from at least one transmitting terminal to a plurality of receiving terminals. The method comprises the steps of
- collecting information indicative of transmission quality from the at least one transmit terminal and the plurality of receiving terminals,
- determining at least one adapted transmission parameter based on the collected information indicative of transmission quality, and
- forwarding the at least one adapted transmission parameter to the at least one transmitting terminal.

## Description

### Field of the Invention

The present invention generally relates to the field of software systems for educational purposes, more in particular for classroom teaching.

### Background of the Invention

A desirable feature for classroom educational software solutions is a screen broadcasting functionality. This allows a teacher to show his screen content on all student computers in a classroom, or to show a student screen to other students. The screen content is typically a computer desktop, which can contain a large amount of information, including text, drawings, video etc. Screen quality needs to be sufficient for good readability.

In many cases one does not have control over the type of hardware used in the classrooms (in terms of e.g. processor and memory specifications of the personal computers, screen resolutions,. quality and speed of the installed network etc.). This means any solution needs to adapt itself in order to offer optimum quality on a wide variety of hardware devices.

Prior art solutions are mainly based on the TCP protocol (point-to-point). One known example of TCP makes use of virtual network computing (VNC). The VNC protocol allows controlling another computer's screen remotely. However, there is no possibility for performing a screen broadcast. All connections made to the VNC are unicast. Therefore, there can only be limited connections made to the same VNC server. In addition, the more clients that connect to the VNC server, the heavier the load and bandwidth usage the VNC server experiences as the server now has to send multiple copies of the same VNC data to each and every client. A solution to overcome this disadvantage of VNC is applying VNCast. A modified VNC client receives VNC data, compresses it into JPEG and multicasts the screen data into the network. The quality at the receiving nodes is however, due to a lack of feedback mechanism, not guaranteed.

In general, broadcast solutions often have fixed bandwidth and intended for video. In an application as classroom teaching, however, not only video can be transmitted, but also e.g. audio data and text. Certain screen capture solutions employ video compression (e.g. MPEG4), which causes text to be unreadable at the receiver side. Further, neither here a feedback mechanism is provided.

Hence, there is a need for a solution capable of supporting a wide range of hardware both at the transmitter and at the receiver side, as well as a varying network quality.

### Aims of the invention

The present invention aims to provide a method and system for adapting at least one transmission parameter while data content is being transmitted from one or more transmitting terminals to a plurality of receiving terminals, e.g. within the context of a classroom.

### Summary

The present invention relates to a method for adapting at least one transmission parameter during the transmission of data content from at least one transmitting terminal to a plurality of receiving terminals. The method comprises :
- collecting information indicative of transmission quality from the at least one transmitting terminal and the plurality of receiving terminals,
- determining at least one adapted transmission parameter based on the collected information indicative of transmission quality, and
- forwarding the at least one adapted transmission parameter to the at least one transmitting terminal.

The proposed method indeed allows for adapting one or more transmission parameters without the need for applying a data communication protocol that guarantees data delivery. Based on the collected transmission quality data adapted value(s) is/are determined and forwarded to the transmitting terminal.

In a preferred embodiment the steps of collecting the information and determining the at least one adapted transmission parameter are performed in a single controller node in the network connecting transmitter terminal and receiving terminals. Alternatively, these tasks can be shared by more than one controller node.

In an embodiment of the invention, wherein a plurality of controller nodes collect the information indicative of transmission quality from a plurality of transmitting terminals, each controller node preferably determines the at least one adapted transmission parameter for a specific transmitting terminal of the plurality of transmitting terminals. Hence, for each transmitting terminal there is a 'dedicated' controller node that calculates the adapted parameter settings.

In an advantageous embodiment of the invention the steps of determining the at least one adapted transmission parameter and forwarding the at least one adapted transmission parameter are performed repeatedly, so that gradually one reaches the optimal transmission parameters. Rough parameter values determined in initial iterations are then fine-tuned in later iterations.

In one embodiment at least a part of the information indicative of transmission quality is obtained from a receiving terminal reporting a data reception problem and the at least one adapted parameter is determined so as to first reduce the amount of data traffic and/or data transmission speed towards the receiving terminals and in later iterations to increase again the amount of data traffic.

In another embodiment at least a part of the information indicative of transmission quality comes from a transmitting terminal that sends its information by means of a data transmission report.

In a preferred embodiment the transmission of data content is performed using the UDP protocol.

The adapted transmission parameters preferably comprise UDP datagram size and/or wait time between UDP datagrams and/or the required bandwidth. The latter contains useful information for performing bandwidth shaping.

In a specific embodiment a controller node is comprised in the transmitting terminal.

In one embodiment the method further comprises the step of actually applying to the at least one transmitting terminal the at least one determined parameter used for the transmission of data content to the plurality of receiving terminals.

In another aspect the invention relates to a program, executable on a programmable device containing instructions, which when executed, perform the method as previously described.

In an aspect the invention relates to a system for adapting at least one transmission parameter during the transmission of data content from at least one transmitting terminal to a plurality of receiving terminals. The system comprises a plurality of terminals arranged for transmitting and/or receiving data content, means for collecting information indicative of transmission quality from the at least one transmitting terminal and the plurality of receiving terminals and means for determining at least one adapted transmission parameter based on the received information indicative of transmission quality, the at least one transmitting terminal being arranged for receiving the at least one adapted transmission parameter.

### Brief Description of the Drawings

Fig. 1 illustrates a configuration wherein the method of the present invention can be applied.

Fig. 2 illustrates a flowchart of a first tuning algorithm.

Fig. 3 illustrates a flowchart of a second tuning algorithm.

Fig. 4 illustrates a flowchart of a third tuning algorithm, suitable for fine-tuning of one or more of the transmission parameters.

### Detailed Description of the Invention

The present invention discloses a screen broadcast tuning method and system for use in the context of a classroom, examination room or boardroom software suite. In a typical application scenario a computer screen needs to be transmitted from a transmitting device (e.g. a desktop computer or laptop) to a large number of receiving terminal devices (typically also desktop computers or laptops). The transmitting device can be any of the participating devices in a network configuration, and can change on a regular basis. Since the screen content is to be distributed to multiple receivers while optimizing network traffic, the used multicast technology typically implies a lack of guaranteed data delivery. The proposed algorithm has as an important task to maximize the likelihood of a smooth delivery of the screen content to a wide variety of receiving hardware devices, while it cannot count on known guaranteed-delivery data transmission protocols like TCP. As the screen content and consequently the involved network load to transmit the screen content can vary widely, the implemented algorithm is adaptive and can swiftly react to screen content changes.

The proposed adaptive software algorithm modifies one or more important transmission parameters which influence the screen transmission quality. In order to do so, the transmitting device and all receiving devices send real-time info about the quality of the received data to a central controller node or, optionally, to a plurality of controller nodes. In the controller node(s) all info is processed in a sequence of different processing steps, which result in an optimal set of transmission parameters for the current network and client configuration. These parameters are forwarded to the transmitting device in order to optimize the screencast transmission. In a most typical situation all receiver terminals receive screencast transmission with the updated transmission parameters. However, in case e.g. only one receiving terminal suffers from severe problems, it may be that the controller node decides not to provide that receiving terminal with further screen content anymore. As already indicated, the solution can comprise a static central point for running all computations and optimizations or it can use a more distributed approach and allocate the currently transmitting device for running a part or all of the processing. As a result, the best suited configuration can be chosen depending on the actual algorithm implementation: processing on the transmitting device minimizes the overload of forwarding calculation results to the transmitter, while central processing in a controller node different from the transmitting terminal eliminates the need for one transmitting client to forward optimization results for the current configuration to a next transmitting client (the next transmitting client can reuse prior optimization results as a starting point for its own optimization sequence).

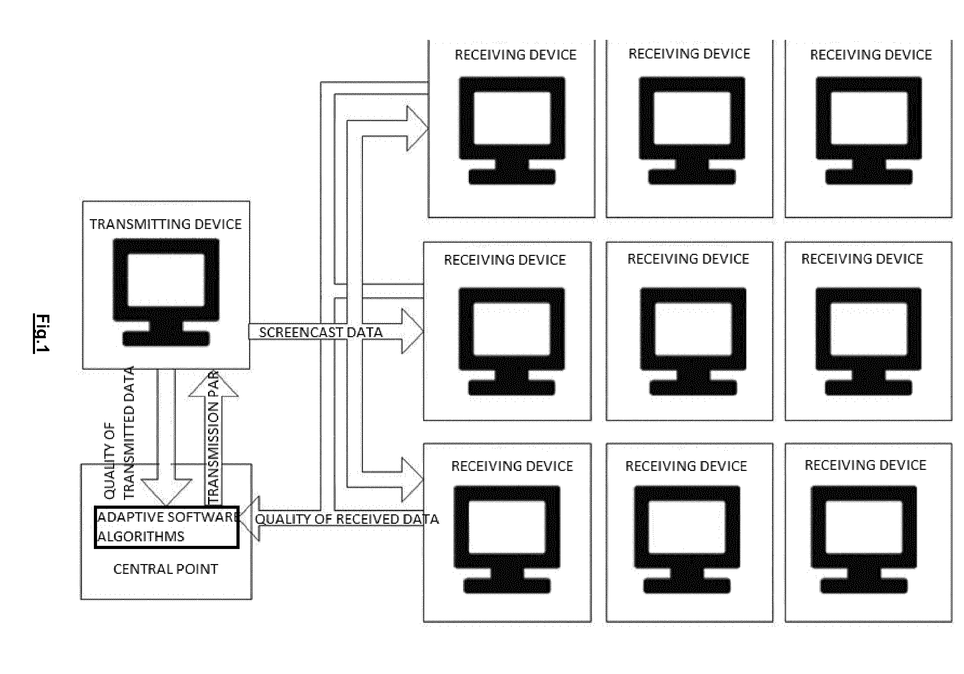

A possible configuration wherein the proposed solution is applied is shown in Fig.1. A transmitting terminal broadcasts its screen content to a number of receiving devices. The transmit terminal sends information concerning the quality of the transmitted data to a separate controller node (in practice this can be a personal computer, any device with a processor and a network connection, or possibly even a dedicated device), which in this case acts as a central point for collecting and processing. At this central point also information is gathered from the receiver terminals related to the quality of the received data. The controller then determines based on the collected data adapted values for one or more transmission parameters.

The proposed solution can cover a scenario with multiple simultaneous transmitting devices. In that case a communication path between the different controller nodes can advantageously be used to share information amongst the different tuning algorithms and to auto-adjust this way the transmission parameters towards an optimal situation for shared network use.

A wide variety of possible parameters can be measured in order to evaluate quality of the received data stream. Examples comprise detection of received UDP data headers or of correctly received slice sequences, determining the average percentage of correctly received frames, etc.

Various tuning algorithms can be applied, either separately or in combination. Some algorithms are preferably used in order to obtain screen reception on all receiving devices in a minimum of time. They quickly react on for example receiving devices reporting failure of data reception and adapt the transmission parameters to obtain less data traffic and/or slower data transmission. Other algorithms run continuously at a slow pace and are rather intended for performing a fine-tuning. Some examples of tuning algorithms are now discussed in more detail.

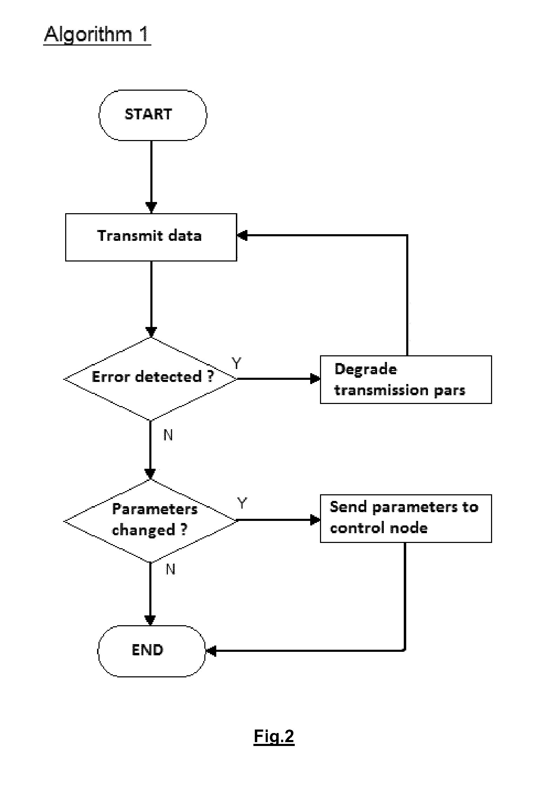

A first possible tuning algorithm (see flowchart in Fig.2) runs at the transmitting side and detects network socket errors indicating failure of transmission. Transmission parameters like UDP datagram size or interval, and/or the optional use of real-time image compression and transmitted screen resolution, which affect the required bandwidth, are then adjusted and a retransmission is attempted. If this is successful, the transmission parameters are sent back to the control node (assuming the control node is not the transmitting terminal itself) which can optionally use these as a starting point for a fine-tuning algorithm.

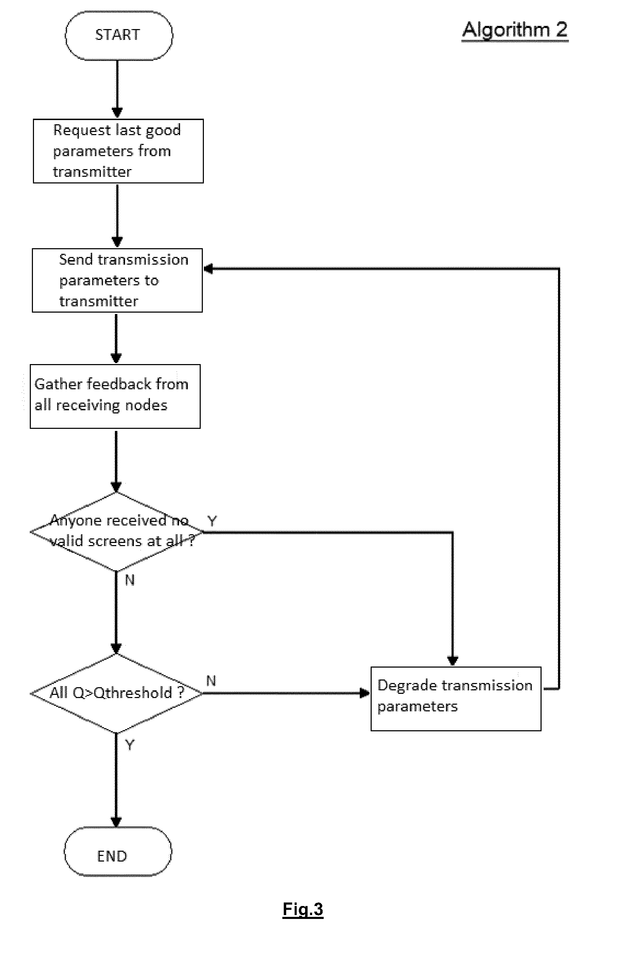

A second example is an algorithm that runs at the central node and is designed to quickly react and come up with a set of tuning parameters that guarantee successful screen reception on all receiving units. This algorithm uses the continuous feedback from the receiving units as its input and adapts the transmission parameters to obtain less data traffic and/or slower data transmission. As soon as all receiving units report good screen reception, the algorithm is stopped and again a fine-tuning algorithm can optionally be started. Fig.3 illustrates a flowchart of a possible implementation. First the controller node requests the last 'good' parameter set from the transmitting terminal. After determining the transmission parameters in the controller they are forwarded to the transmitter. Next feedback is obtained from the various receiving terminals. If any of those terminals does not receive valid screens at all, then transmission parameters have to be degraded. Otherwise it is checked whether a given quality threshold is met. If that is not the case, then the transmission parameters have to be degraded.

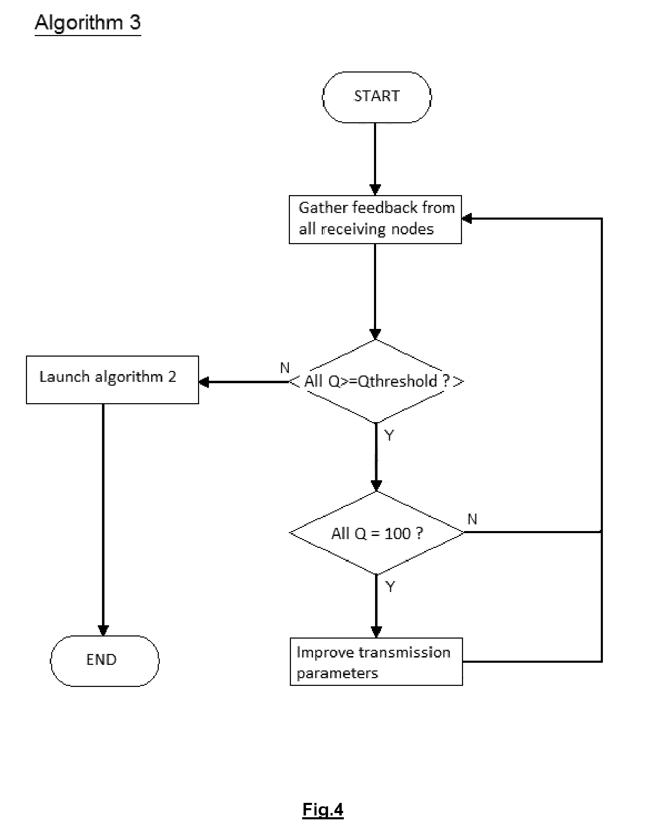

An example of a fine-tuning algorithm is described now. This algorithm runs at a (optionally, central) controller node. It is designed to slowly improve the screen quality by adjusting the transmission parameters so that data traffic increases again. The algorithm also continuously monitors the influence of the changes on the quality of the data at the receiving side. If the quality drops below a certain threshold the second algorithm kicks in to restore good screen reception in a minimum of time. In the flowchart of Fig.4 feedback is collected from the various receiving nodes. If there is a receiver terminal where a given threshold quality level is not reached, the tuning algorithm as shown in Fig.3 can for example be launched (see left hand branch in Fig.4).

Some practical application scenarios are now discussed. First a scenario is considered where a new receiver terminal joins in. Suppose that in an ongoing screen transmission a fine-tuning algorithm is executed and the screen quality is slowly improving. Then suddenly a new, low performance receiver unit joins in. The new receiver does not receive any valid screen data at all and reports this to a control node. The tuning algorithm running on the control node notices that the quality of one receiver is below the set quality threshold and decides to launch the above-mentioned second algorithm in order to quickly establish valid screen reception with all receivers. The second algorithm continuously degrades the transmission parameters until all receivers get an acceptable screen stream. Then a fine-tuning algorithm as described above can be launched again so that slowly the quality improves again.

In another practical scenario the screen content changes dramatically. Suppose here that in an ongoing screen transmission, fine-tuning is performed and the screen quality is slowly improving. The content of the screen of the transmitter mainly consists of a monotonous pattern and colour (e.g. solid colour desktop background), which results, after compression, in small frame sizes. Suddenly the transmitter launches video on its device. The frames are now much bigger, the bandwidth of the network is insufficient, it gets flooded and the transmitter gets network sockets errors. The transmitter now launches the above-mentioned first algorithm which degrades the transmission parameters and results in successful transmission after a few iterations. The obtained parameters are sent to the control node. However, some of the receiving units are still not getting any valid screen data. The algorithm on the control node notices that the quality of some or all receivers is below the threshold and decides to launch the second tuning algorithm (see second example above) in order to quickly establish valid screen transmission to all receivers. This algorithm continuously adjusts (degrades) the transmission parameters until all receivers get an acceptable screen stream. Then the algorithm for fine-tuning is launched again, so that slowly the quality can be improved again.

In a further example concurrent screen broadcasts are considered. Suppose again that in an ongoing screen transmission a fine-tuning algorithm like the one described in Fig.4, is performed and the screen quality is slowly improving. A new screen transmission is started in a separate room in the same building. So now there are two separate sets of transmitters, receivers and control nodes on the same network. As the available bandwidth is already taken by the first screen transmission, the second one would have trouble getting started and would have poor quality. Therefore the two control nodes establish a communication path between them and decide to divide the bandwidth equally. In the first transmission, algorithm two is launched to degrade the transmission parameters. In the second transmission, fine-tuning is used to improve the parameters. The communication between the controls nodes ensures the two sets of transmission parameters are synchronized and the available bandwidth is divided equally.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Method for adapting at least one transmission parameter during the transmission of data content from at least one transmitting terminal to a plurality of receiving terminals, said method comprising the steps of
- collecting information indicative of transmission quality from said at least one transmitting terminal and said plurality of receiving terminals,
- determining at least one adapted transmission parameter based on said collected information indicative of transmission quality, and
- forwarding said at least one adapted transmission parameter to said at least one transmitting terminal.

2. Method for adapting at least one transmission parameter as in claim 1, whereby the steps of collecting said information and determining said at least one adapted transmission parameter are performed in one or more controller nodes.

3. Method for adapting at least one transmission parameter as in claim 2, whereby a plurality of controller nodes collect said information indicative of transmission quality from a plurality of transmitting terminals and whereby each controller node determines said at least one adapted transmission parameter for a specific transmitting terminal of said plurality of transmitting terminals.

4. Method for adapting at least one transmission parameter as in any of claims 1 to 3, wherein the steps of determining said at least one adapted transmission parameter and forwarding said at least one adapted transmission parameter are performed repeatedly.

5. Method for adapting at least one transmission parameter as in claim 4, wherein at least a part of said information indicative of transmission quality is obtained from a receiving terminal of said plurality reporting a data reception problem and wherein said at least one adapted parameter is determined so as to reduce the amount of data traffic and/or data transmission speed towards said plurality of receiving terminals and in later iterations to increase again the amount of data traffic.

6. Method for adapting at least one transmission parameter as in any of the previous claims, wherein at least a part of said information indicative of transmission quality is comprised in a data transmission report sent by a transmitting terminal.

7. Method for adapting at least one transmission parameter as in any of the previous claims, whereby said transmission of data content is performed using the UDP protocol.

8. Method for adapting at least one transmission parameter as in claim 5, whereby said adapted transmission parameters comprise UDP datagram size and/or wait time between UDP datagrams and/or the required bandwidth.

9. Method for adapting at least one transmission parameter as in any of claims 2 to 8, whereby said at least one controller node is comprised in said transmitting terminal.

10. Method for adapting at least one transmission parameter as in any of the previous claims, further comprising the step of applying said at least one adapted transmission parameter for said transmission of data content to said plurality of receiving terminals.

11. A program, executable on a programmable device containing instructions, which when executed, perform the method as in any of the claims 1 to 9.

12. System for adapting at least one transmission parameter during the transmission of data content from at least one transmitting terminal to a plurality of receiving terminals, said system comprising a plurality of terminals arranged for transmitting and/or receiving data content, means for collecting information indicative of transmission quality from at least one transmitting terminal of said plurality of terminals and said plurality of receiving terminals and means for determining at least one adapted transmission parameter based on said received information indicative of transmission quality, the at least one transmitting terminal being arranged for receiving said at least one adapted transmission parameter.
